Europäisches Patentamt

European Patent Office

Office européen des brevets

(19)

(11) Veröffentlichungsnummer: **0 293 326**
**A1**

## (12) EUROPÄISCHE PATENTANMELDUNG

(21) Anmeldenummer: **88810282.9**

(22) Anmeldetag: **03.05.88**

(51) Int. Cl.⁴: **G 11 B 23/023**
**G 11 B 33/04**

(30) Priorität: **12.05.87 CH 1811/87**

(43) Veröffentlichungstag der Anmeldung:
**30.11.88 Patentblatt 88/48**

(84) Benannte Vertragsstaaten:
**AT BE CH DE FR GB IT LI NL**

(71) Anmelder: **Kunststoff Schwanden AG**
**Im Tschachen**
**CH-8762 Schwanden/GL (CH)**

(72) Erfinder: **Kiener, Albert**
**Kännelstrasse 31**
**D-8753 Mollis (DE)**

(74) Vertreter: **Quehl, Horst Max, Dipl.-Ing.**
**Patentanwalt Seestrasse 640 Postfach 90**
**CH-8706 Meilen/Zürich (CH)**

(54) **Lagervorrichtung für viereckige flache Gegenstände.**

(57) Die Vorrichtung hat mehrere, in einem gemeinsamen Gehäuse (3) nebeneinander angeordnete Aufnahmefächer (2) für viereckige flache Gegenstände (4), wie z.B. CD-Kassetten. Für eine selektive Ausgabe dieser Gegenstände (4) ist unterhalb der als Führungsbahn (8) dienenden Bodenwand jedes Aufnahmefaches (2) ein Ausgabehebel (13') gelagert, der langer ist als eine Seitenkante (9) des Gegenstandes (4). Vor jedem Aufnahmefach (2) befindet sich eine Betätigungstaste (14') des Ausgabehebels (13') und eine an ihm angeformte Verriegelungsnase (33), die den Gegenstand in seinem Aufnahmefach (2) spielfrei verriegelt. Das hintere Ende des Ausgabehebels (13') hat einen Ausschiebenocken (15'), dessen Steuerfläche (16') beim Betätigen des Ausgabehebels (13') auf die hintere, untere Ecke (20) des Gegenstandes (4) drückt und über sie gleitet, so dass sich dabei der Gegenstand (4) auf der Führungsbahn (8) in eine vorgeschobene Entnahmeposition gleitet bewegt.

Fig.6

EP 0 293 326 A1

## Beschreibung

### Vorrichtung für die Aufbewahrung und selektive Ausgabe von viereckigen flachen Gegenständen

Die Erfindung betrifft eine Vorrichtung mit viereckigen flachen Gegenständen, insbesondere mit CD-Kassetten, für deren Aufbewahrung und und selektiven Ausgabe, mit mehreren, in einem gemeinsamen Gehäuse angeordneten, zueinander parallelen Aufnahmefächern für diese Gegenstände, die durch Abstandshalter gegenseitig, einen rückseitigen Anschlag und durch mindestens eine relativ zu dem Gehäuse fixierte Führungsbahn für eine Seitenkante der Gegenstände begrenzt sind, und mit den Aufnahmefächern zugeordneten Ausgabehebeln, deren vorderes Ende eine Taste bildet, die vor dem zugehörigen Aufnahmefach angeordnet ist und deren hinteres Ende sich zum Hinterfassen des Gegenstandes bis in die Nähe des rückseitigen Anschlages erstreckt.

Eine Vorrichtung dieser Art ist bekannt durch die GB-A-1 451 923. Sie hat aufgrund der hochkantigen Anordnung von auszugebenden Tonbandkassetten entsprechend verhältnismässig kurze Ausgabehebel, so dass deren Schwenkbewegung eine ausreichend grosse Komponente in Ausgaberichtung hat, um die Tonbandkassetten entsprechend nach vorn zu kippen. Die Kippbewegung erfolgt gemeinsam mit der Schwenkbewegung des Ausgabehebels, da dieser die Kassette beidseitig klemmend umfasst. Um die Kassette anschliessend zu entnehmen, muss sie mit der anderen Hand aus der Klemmhalterung herausgezogen werden, während die Hebeltaste unten gehalten wird. Für die Führung der Kassette beim Einschieben in das durch den Ausgabehebel selbst gebildete Aufnahmefach und damit Bestimmung ihrer vertikalen Ausrichtung ist unterhalb der Kassette eine schmale Führungsrippe vorgesehen, von der die Kassette durch die Ausgabebewegung abgehoben wird.

Durch die EP-A-0 199 899 und die FR-A-1 278 737 sind Vorrichtungen bekannt, bei denen die Gegenstände ebenfalls in einem als Wippe ausgeführten Aufnahmefach gehalten werden, um zur selektiven Ausgabe nach vorn gekippt zu werden. Zum vollständigen Entnehmen des Gegenstandes ist ebenfalls eine Zweihandbedienung erforderlich. Bei der Vorrichtung entsprechend der EP-A-0 199 899 ist es dabei ausserdem erforderlich, die Kassette über einen vorderen Anschlag des Wippenhebels herauszuheben.

Durch die US-A-3 658 185 und die DE-C-757 046 sind Vorrichtungen zum Aufbewahren und selektiven Ausgeben von Schallplatten bekannt, die durch einen Ausgabehebel aus einer hinteren Rastposition herausgehoben werden, so dass sie über eine Raste in eine vordere Entnahmeposition rollen.

Weiterhin ist durch die US-4 121 877 eine zweihändig zu bedienende Vorrichtung bekannt, bei der die Gegenstände durch einen kurzen Hebel aus einem Schacht um eine zum Erfassen des Gegenstandes ausreichende Distanz vertikal nach oben herausgehoben werden. Eine Betätigung des Ausgabehebels ist nur von dem Bereich der Vorrichtung aus möglich ,in dem der Ausgabehebel auf den Gegenstand einwirkt, nicht jedoch in dem Bereich an dem der Gegenstand entnommen werden soll.

Die Vorrichtung entsprechend der US-A-4 162 112 veranschaulicht die konstruktiven Schwierigkeiten, die sich aufgrund der Forderung ergeben, den Ausgabehebel von der Ausgabeseite her zu betätigen. Die Vorrichtung hat eine Schiebestange, die über ein flexibles Gelenk auf das kurze Ende eines an der Rückseite der Vorrichtung gelagerten Ausgabehebels wirkt. Das Gehäuse dieser Vorrichtung muss fest montiert sein, da die Vorrichtung sich sonst durch die parallel zur Standfläche wirkende Betätigungskraft verschieben würde.

Durch die US-A 4 087 138 ist weiterhin eine Vorrichtung bekannt, bei der die Gegenstände durch den Druck eines an ihrer rückseitigen Kante anliegenden Federarmes ausgeworfen werden. Dieser Federarm ist über einen Hebelarm mit einer vorderen Rastklinke verbunden, so dass er diese unter Federvorspannung in Eingriff mit dem in einem Aufnahmefach eingeschlossenen Gegenstand hält. Somit ist der Gegenstand zwischen dem Federarm und der Rastklinke nach Art einer umfasssenden Federklammer eingeschlossen. Das Einschieben der Gegenstände in die Vorrichtung zur Erzeugung der Federvorspannung ist mit entsprechend grossem Kraftaufwand verbunden, so dass eine feste Montage der Vorrichtung erforderlich ist.

Der Erfindung liegt die Aufgabe zugrunde, eine Vorrichtung der eingangs genannten Art zu finden, die die Nachteile bekannter Vorrichtungen für die Aufbewahrung und selektive Ausgabe flacher viereckiger Gegenstände vermeidet und die insbesondere bei einfacher, kompakter und ästhetischer Herstellbarkeit leicht und einhändig bedienbar ist, sowohl beim Einsetzen der Gegenstände in die Vorrichtung als auch bei ihrer selektiven Ausgabe. Ausserdem soll sie auch für grössere Gegenstände als Tonbandkassetten, wie z.B. CD- oder Videokassetten, leicht herstellbar und bedienbar sein. Weiterhin soll sie die Gegenstände zuverlässig halten und deren Ausgabe ohne Kippen gewährleisten. Die Lösung dieser Aufgabe erfolgt erfindungsgemäss dadurch, dass die Ausgabehebel sich auf der den Aufnahmefächern abgekehrten Seite einer Führungswand erstrecken und dort um eine relativ zum Gehäuse fixierte geometrische Achse schwenkbar gelagert sind, wobei das hintere Ende der Ausgabehebel als zur Einwirkung auf eine hintere Ecke des Gegenstandes bestimmtes Nockenorgan ausgebildet ist.

Beim Betätigen des Ausgabehebels schiebt sich somit das Nokkenorgan hinter den Gegenstand, angenähert in Richtung parallel zu dessen hinterer Kante und in stetigem Kontakt mit dessen hinterer Ecke. Durch eine zweckmässige Bestimmung des Neigungswinkels der Steuerbahn des Nockenorgans relativ zur Längsachse des Ausgabehebels ergibt sich bei dieser Bewegung des Nockenorgans eine ausreichend grosse Komponente in Richtung der Führungsbahn und entsprechend eine ausreichende Verschiebelänge, um den Gegenstand in eine griffgerechte Position aus der Reihe der übrigen Gegenstände heraus nach vorn zu schieben. Dabei kann die Steuerbahn eben sein oder einen gekrümmten Verlauf haben

Vorteilhaft ist am vorderen Endes des Ausgabehebels ein Anschlag für die vordere Kante des aufzubewahrenden Gegenstandes angeformt, der in Ruhelage des Ausgabehebels über die Führungsbahn übersteht, so dass er bei Betätigung des Ausgabehebels die Führungsbahn nach vorn freigibt.

Weitere vorteilhafte Ausführungsmöglichkeiten der Erfindung sind der folgenden Beschreibung von Beispielen anhand der Zeichnungen zu entnehmen. Es zeigt:

Fig.1 eine perspektivische Darstellung einer ersten Ausführungsform der Vorrichtung,

Fig.2 einen entlang der Längsachse eines Ausgabehebels verlaufenden Querschnitt durch die Vorrichtung nach Fig.1, wobei sich der Ausgabehebel in Ruheposition be findet,

Fig.3 eine Darstellung entsprechend Fig.2, jedoch mit in Ausgabeposition gehaltenem Ausgabehebel und zusätzlich mit einem die Kassette auf drei Seiten umschliessenden Gehäuse,

Fig.4 eine perspektivische Darstellung eines Bereiches der dem Aufnahmefach abgekehrten Seite einer Führungswand, mit Mitteln für die Lagerung von Ausgabehebeln,

Fig.5 eine perspektivische Darstellung eines Achszapfen aufweisenden Teils zweier Ausgabehebel,

Fig.6 einen entlang der Längsachse eines Ausgabehebels verlaufenden Querschnitt durch eine weitere Ausführungsform der Vorrichtung,

Fig.7 eine unterbrochen dargestellte Seitenansicht eines Ausgabehebels in Originalgrösse und

Fig.8 eine perspektivische Darstellung einer zweireihigen Tastenanordnung.

Die erfindungsgemässen Vorrichtungen 1,1′,1″ haben mehrere, in enger Anordnung parallel nebeneinander ausgerichtete Aufnahmefächer 2, die in einem gemeinsamen Gehäuse 3 eingeschlossen sind. Die Grösse der Aufnahmefächer 2 ist unter Berücksichtigung eines notwendigen Führungsspiels der Grösse der aufzubewahrenden Gegenstände 4 angepasst, die bei den dargestellten Ausführungsbeispiee den Kassetten von CD-Tonträgerplatten entsprechen. Jedes Aufnahmefach 2 ist durch einen rückseitigen Anschlag 5 für die Hinterkante 6 des Gegenstandes 4 , durch seitliche Abstandshalter 7 und durch mindestens eine Führungsbahn 8 für eine Kante 9 des Gegenstandes begrenzt.

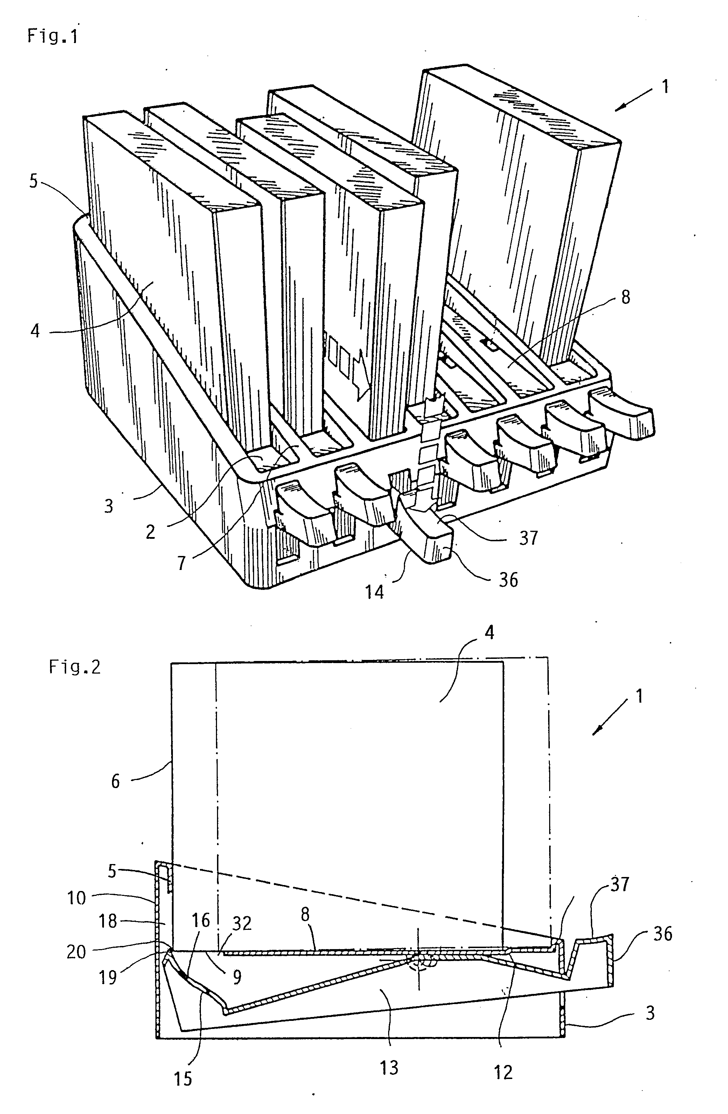

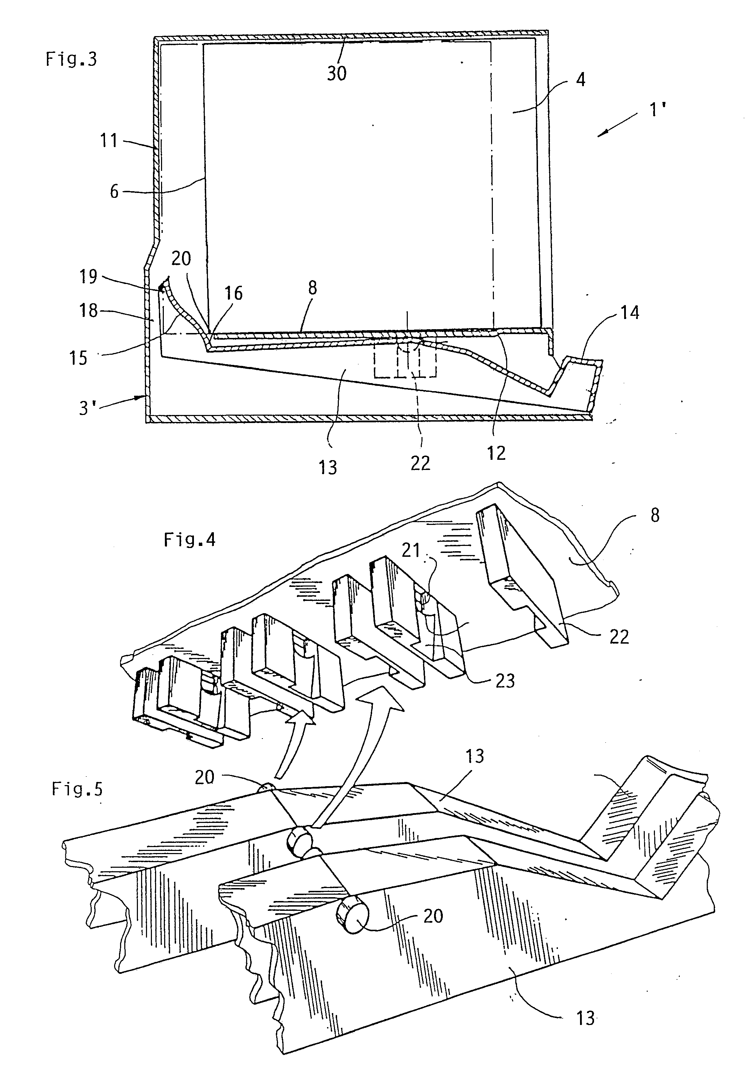

Die Ausgestaltung dieser Fachbegrenzungen 5,7 und 8 kann verschieden sein, da für die Halterung und Führung der ebene Begrenzungen aufweisenden Gegenstände einzelne Anschläge ausreichend sein könnten. Bei den dargestellten Ausführungsbeispielen bestehen die Abstandshalter 7 aus nach hinten ununterbrochen durchlaufenden dünnen Zwischenwänden, und auch die Führungsbahnen 8 sind durch glatte Führungswände gebildet, so dass sich die Gegenstände leicht in die Aufnahmefächer 2 einschieben und wieder ausschieben lassen. Der rückseitige Anschlag 5 besteht bei den Ausführungsbeispielen der Fig.1,2 und 6 aus einem nach innen versetzten Rand der rückseitigen Gehäusewand 10, während er beim Ausführungsbeispiel nach Fig.3 durch einen nach innen versetzten Wandbereich 11 gebildet ist.

Die Ausführungsbeispiele der Fig. 1,2 und 6 sind für die vertikale Ausrichtung der Gegenstände 4 vorgesehen, so dass sich die Gegenstände 4 mit einer ihrer Kanten 9 auf der Führungsbahn 8 abstützen. Bei diesen Ausführungsformen können die Aufnahmefächer 2 entsprechend den Darstellungen nach oben offen sein, obwohl sie zum Schutz gegen Staub vorzugsweise durch eine nicht dargestellte, gemeinsame Gehäusehaube überdeckt sind, die auch als fester Bestandteil des Gehäuses 3 vorgesehen sein kann, wie es das Ausführungsbeispiel nach Fig.3 zeigt.

Die Vorrichtung nach Fig.3 ist sowohl für die horizontale als auch vertikale Ausrichtung der viereckigen flachen Gegenstände geeignet, indem jede ihrer fünf zueinander senkrecht stehenden Wände den Boden der Vorrichtung 1′ bilden kann. Am jeweiligen Boden vorgesehene Haftmittel, z.B. flache Gummifüsse, verhindern eine unbeabsichtigte Verschiebung der Vorrichtung.

Für die selektive Entnahme eines Gegenstandes 4, z.B. einer CD-Kassette, ist jedem Aufnahmefach 2 ein Ausgabehebel 13, 13′ zugeordnet, der sich hinter oder unter einer Führungsbahn 8 in deren Längsrichtung erstreckt. Dabei befindet sich sein vorderes, als Betätigungstaste 14, 14′ ausgebildes Ende am vorderen Ende der Führungsbahn 8 und sein hinteres, als Ausschiebenocken 15 ausgebildetes Ende am hinteren Ende der Führungsbahn 8. In Ruheposition des Ausgabehebels 13 ist ausserdem zumindest der Ausschiebenocken 15, 15′ mit seiner Steuerfläche 16, 16′ hinter oder unter der Ebene der Führungsbahn 8 angeordnet, so dass diese erst beim Betätigen der Taste 14,14′ sich in die Ebene der Führungsbahn hinein bewegt.

Wie bereits erwähnt, ist der rückseitige Anschlag 5 der Aufnahmefächer 2 gegenüber dem unteren Bereich der rückseitigen Gehäusewand 10 nach innen versetzt. Durch den dadurch zwischen der Hinterkante 6 des Gegenstandes 4 und diesem Bereich der rückseitigen Gehäusewand 10 vorhandenen Spaltraum 18 kann sich der Ausschiebenokken 15,15′ mit seinem äusseren, spitzen Ende 19 hinter die hintere Ecke 20 des Gegenstandes 4 bewegen, so dass anschliessend die Steuerfläche 16,16′ des Ausschiebenokkens 15,15′ auf diese Ecke 20 drückt und nach deren Ausweichen an ihr entlanggleitet. Dabei wird der Gegenstand entlang der Führungsbahn 8 nach vorn ausgeschoben. Durch schlagartiges Betätigen der Taste 14,14′,14″ des Ausgabehebels kann der Gegenstand 4 auch mit Beschleunigung ausgeschoben werden, so dass er weiter nach vorn gelangt als dem Schiebeweg des Ausschiebenokkens 15,15′ entspricht.

Bei den Ausführungsbeispielen der Fig.1,2 und 3 hat die Steuerfläche 16 anschliessend an das spitze Ende 19 des Ausschiebenockens 15 einen konkaven Bereich, der in einen konvexen Bereich übergeht, so dass ein s-förmiger Kurvenverlauf vorhanden ist. Auf diese Weise hat die an der Ecke 20 wirkende Kraft bei Einleitung des Bewegungsablaufs des Gegenstandes 4 eine grössere Komponente in Richtung der Ausschiebebewegung des Gegenstandes 4, so dass die Ruhereibung des Gegenstandes 4 auf der Führungsbahn oder ein Absatz 12 der Führungsbahn 8 leichter überwunden werden. Nachdem sich der Gegenstand 4 bereits bewegt und der Ausschiebenocken 15 sich weiter in Kontakt mit der Ecke 20 hinter diesen schiebt, verringert sich die Grösse der in Bewegungsrichtung wirkenden Kraftkomponente, stattdessen wird jedoch die Bewegungskomponente in Richtung der Ausschiebewegung grösser.

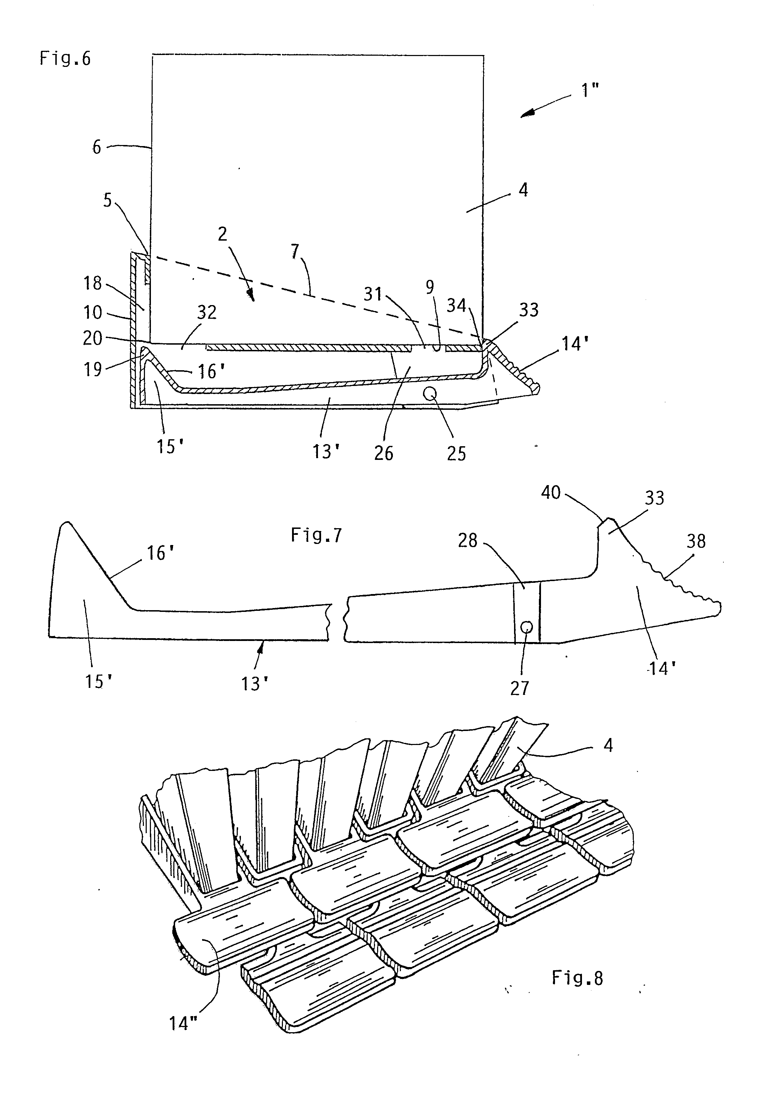

Auch bei ebenem Verlauf der Steuerfläche 16' des Ausschiebenokkens 15' entsprechend dem Ausführungsbeispiel der Fig.6,7 ergibt sich aufgrund einer verhältnismässig kurzen Schwenkbewegung des Ausgabehebels 13' durch den Gleitkontakt mit der Ecke 20 des Gegenstandes 4 eine ausreichend grosse Ausschiebebewegung, so dass sich der Gegenstand 4 griffgerecht über die Reihe der in der Vorrichtung 1'' verbleibenden Gegenstände nach vorn schiebt. Dabei wird, im Gegensatz zu bekannten Vorrichtungen, die Grösse der Ausschiebebewegung nicht wesentlich durch die Länge des Ausgabehebels 13,13' beeinflusst, die grösser ist als die Kantenlänge des Gegenstandes 4.

Der Winkel, den die Steuerfläche 16,16' oder eine an eine Stelle der Steuerfläche 16 gelegte Tangente in jeder Winkelposition des Ausgabehebels 13 mit der Ebene der Führungsbahn 8 einschliesst, ist vorzugsweise so gewählt, dass die senkrecht zur Führungsbahn 8 wirkende Komponente der durch den Ausschiebenocken 15,15' an der Ecke 20 auf den Gegenstand 4 ausgeübten Kraft, bei senkrechter Ausrichtung der Gegenstände 4, nicht ausreicht, diese von der Führungsbahn 8 abzuheben. Falls diese Kraftkomponente den Gegenstand 4 von seiner Führungsbahn 8 wegbewegt, wie es bei deren horizontaler Ausrichtung zu erwarten ist, soll sie weiterhin den Gegenstand 4 nur so schwach gegen die entsprechend Fig.4 gegenüberliegende, zweite Führungsbahn 30 drücken, dass die dort entstehende Reibungskraft wesentlich kleiner ist als die parallel zu den Führungsbahnen 8,20 wirkende, ausschiebende Kraftkomponente. Die Grösse dieses Winkels liegt beispielsweise im Bereich von 110° bis 130°. Die erforderliche Mindestgrösse dieses Winkels ist durch die Gleiteigenschaften zwischen dem Material des Gehäuses 3 der Vorrichtung 1,1',1'' und dem Material des Gegenstandes 4 abhängig.

Fig.4 und 5 zeigen ein Beispiel für die Ausführung der Befestigung der Ausgabehebel 13 an der Aussenseite der Führungswand 8. An den Ausgabehebeln 13 seitlich angeformte Achszapfen 20 sind in Ausnehmungen 21 am inneren Ende von paarweise vorgesehenen Fortsätzen 22 der Führungswand 8 eingerastet. Das Einrasten wird durch zu den Ausnehmungen 21 gerichtete Keilflächen 23 erleichtert, so dass die Montage der Ausgabehebel 13 sehr einfach ist. In umgekehrter Anordnung können entsprechend dem Ausführungsbeispiel der Fig.6,7 die Achszapfen 25 auch an beidseitig zu den Ausgabehebeln 13' an der Aussenseite, bzw. unter der Führungswand 8 angeformten, dünnwandigen Fortsätzen 26 vorgesehen sein, die in Lageröffnungen 27 der Ausgabehebel 13' eingerastet sind. Entsprechend sind auch die die Montage erleichternden Keilflächen 28 seitlich an den Ausgabehebeln 13' vorgesehen. Wenn die Achszapfen 25 beim Herstellen der Verrastung an den Keilflächen 28 entlanggleiten, können sowohl die die Achs zapfen 25 tragenden Fortsätze 26 als auch die Querschnittsschenkel der Ausgabehebel 13' federnd ausweichen, bis die Einrastung in den Lageröffnungen 27 erfolgt. Zur spritztechnisch einfacheren Herstellung der Achszapfen ist die Führungswand 8 in deren Bereich unterbrochen, so dass ein Formwerkzeug durch die entsprechende Oeffnung 31 eingreifen kann. Eine zweite Oeffnung 32 zwischen der rückseitigen Gehäusewand 10 und der Führungswand 8 ermöglicht die Bewegung des Ausschiebenokkens 15,15' hinter die Ecke 20 des Gegenstandes 4.

Insbesondere für die Ausführungsformen mit senkrechter Ausrichtung der Gegenstände 4 ist vorzugsweise am vorderen Ende der Ausgabehebel 13', anschliessend an die Betätigungstaste 14', ein vorderer Anschlag 33 für die Gegenstände 4 vorgesehen, der sie in dem Aufnahmefach 2 verriegelt. Er steht nasenförmig von der Taste 14' nach oben ab und durch ihn findet auch der Ausgabehebel 13' an der Vorderkante 34 der Führungswand 8 einen Anschlag. Dadurch, dass der den Ausschiebenokken 15' aufweisende Arm des Ausgabehebels 13', bezogen auf seine Schwenkachse 25, ein wesentlich grösseres Gewicht hat als der die Betätigungstaste 14' aufweisende Hebelarm, liegt der Anschlag mit entsprechender Hebelkraft an dem Gegenstand 4 an und hält ihn spielfrei in dem Aufnahmefach 2. Das obere Ende des Anschlages 33 hat eine Schrägfläche 40, über die die vordere Ecke des Gegenstandes 4 gleitet, wenn dieser aus dem Aufnahmefach 2 ausgeschoben wird. Anschliessend gleitet der Gegenstand 4 auf dieses Ende des Anschlags, so dass die Betätigungstaste 14' bis zur vollständigen Entnahme des Gegenstandes niedergedrückt bleibt..

Die Zeichnungen zeigen vier verschiedene Ausführungsbeispiele für die Formgebung der Betätigungstasten 14,14',14''. Bei den Ausführungsbeispielen der Fig.1 bis 3 sind die Tasten 14 ähnlich wie Schreibmaschinentasten geformt. Auf ihrer Stirnfläche 36 oder ihrer Betätigungsfläche 37 können sie mit Schriftzeichen, z.B. Numerierungen, versehen sein.. Beim Ausführungsbeispiel nach Fig.6,7 geht die mit einer Profilierung versehene Betätigungsfläche 38 stufenlos in den nasenförmigen Anschlag 33 über und weist dabei beispielsweise eine konkave Krümmung auf. Das obere Ende des Anschlages 33 hat eine Schrägfläche 40, über die die vordere Ecke des Gegenstandes 4 gleitet, wenn dieser aus dem Aufnahmefach 2 ausgeschoben wird. Anschliessend gleitet der Gegenstand 4 auf dieses Ende des Anschlags, so dass die Betätigungstaste 14' bis zur vollständigen Entnahme des Gegenstandes niedergedrückt bleibt.

Fig.8 zeigt eine Ausführungsbeispiel mit zweireihiger Anordnung der Betätigungstasten 14″, so dass sie breiter ausgeführt sein können, z.B. um eine grössere Betätigungsfläche für Beschriftungen zur Verfügung zu stellen.

## Patentansprüche

1. Vorrichtung mit viereckigen flachen Gegenständen (4), insbesondere mit CD-Kassetten, für deren Aufbewahrung und selektiven Ausgabe, mit mehreren, in einem gemeinsamen Gehäuse (3,3′,3″) angeordneten, zueinander parallelen Aufnahmefächern (2) für diese Gegenstände (4), die durch Abstandshalter (7) gegenseitig, einen rückseitigen Anschlag (5) und durch mindestens eine relativ zu dem Gehäuse (3,3′,3″) fixierte Führungsbahn (8) für eine Seitenkante der Gegenstände (4) begrenzt sind, und mit den Aufnahmefächern (2) zugeordneten Ausgabehebeln (13,13′), deren vorderes Ende eine Betätigungstaste (14,14′,14″) bildet, die vor dem zugehörigen Aufnahmefach (2) angeordnet ist und deren hinteres Ende sich zum Hinterfassen des Gegenstandes bis in die Nähe des rückseitigen Anschlages (5) erstreckt, dadurch gekennzeichnet, dass die Ausgabehebel (13,13′) sich auf der den Aufnahmefächern (2) abgekehrten Seite einer Führungbahn (8) erstrecken und dort um eine relativ zum Gehäuse (3,3′,3″) fixierte geometrische Achse schwenkbar gelagert sind, wobei das hintere Ende der Ausgabehebel (13,13′) als zur Einwirkung auf eine hintere Ecke (20) des Gegenstandes (4) bestimmter Ausschiebenocken (15,15′) ausgebildet ist.

2. Vorrichtung nach Anspruch 1, dadurch gekennzeichnet, dass der Ausschiebenocken (15′) eine im Winkel von mehr als 90° zur Längsachse des Ausgabehebels (13′) verlaufende ebene Steuerfläche (16′) aufweist.

3. Vorrichtung nach Anspruch 1, dadurch gekennzeichnet, dass der Ausschiebenocken (15) entlang mindestens eines Teiles seiner für den Gleitkontakt mit der Ecke (20) des Gegenstandes (4) bestimmten Steuerfläche (16) konkav gekrümmt ist.

4. Vorrichtung nach Anspruch 2 oder 3, dadurch gekennzeichnet, dass die Steuerfläche (16′) oder eine Tangente an die Steuerfläche (16) mit der Ebene der Führungsbahn (8) einen Winkel im Bereich zwischen 110° und 130° einschliesst.

5. Vorrichtung nach Anspruch 1, dadurch gekennzeichnet, dass die die Aufnahmefächer (2) begrenzenden Teile (5,7,8) zusammen einerseits und die einzelnen Ausgabehebel (13,13′) andererseits einstückig als Kunststoffkörper geformt sind, wobei die Ausgabehebel (13,13′) einen einseitig offenen Hohlquerschnitt aufweisen und jeweils beidseitig an Fortsätzen (22,26) gelagert sind, indem diese auf der den Aufnahmefächern (2) abgekehrten Seite an eine die Führungsbahn (8) bildende Führungswand angeformt sind und zwischen die Ausgabehebel (13,13′) eingreifen.

6. Vorrichtung nach Anspruch 1, dadurch gekennzeichnet, dass im Bereich des vorderen Endes der Ausgabehebel (13′) ein vorderseitiger Anschlag (33) an diesen angeformt ist, der in Ruhelage des Ausgabehebels (13′) über die Führungsebene der Führungsbahn (8) übersteht.

7. Vorrichtung nach Anspruch 6, dadurch gekennzeichnet, dass der vorderseitige Anschlag (33) einen nasenförmig abstehenden Teil der Betätigungstaste (14′) bildet.

8. Vorrichtung nach einem der Anspüche 1 bis 7, dadurch gekennzeichnet, dass der den Ausschiebenocken (15,15′) aufweisende Arm des Ausgabehebels (13,13′) um das Mehrfache länger ist als der die Betätigungstaste (14,14′,14″) aufweisende Hebelarm.

9. Vorrichtung nach Anspruch 1, dadurch gekennzeichnet, dass die Aufnahmefächer (2) horizontal ausgerichtet und beidseitig durch je eine Führungswand (8,30) für eine Kante (9) der Gegenstände (4) begrenzt sind.

029332G

Fig.1

Fig.2

Fig.3

Fig.4

Fig.5

0293326

**Fig.6**

**Fig.7**

**Fig.8**

Europäisches Patentamt

**EUROPÄISCHER RECHERCHENBERICHT**

Nummer der Anmeldung

EP 88 81 0282

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 087 138 (McRAE)<br>* Spalte 2, Zeile 36 - Spalte 4, Zeile 45; Figuren *<br>--- | 1,6,7,9 | G 11 B 23/023<br>G 11 B 33/04 |
| X | US-A-4 162 112 (KONKLER)<br>* Spalte 2, Zeile 23 - Spalte 3, Zeile 51; Figuren *<br>--- | 1,6-9 | |
| X | GB-A-1 451 923 (HANCOCK, CORFIELD AND WALTER LTD)<br>* Seite 2, Zeile 17 - Seite 3, Zeile 115; Figuren *<br>--- | 1,2,5-9 | |
| A | US-A-4 121 877 (BROWN)<br>* Spalte 1, Zeile 66 - Spalte 4, Zeile 54; Figuren *<br>--- | 1,2,5,7 -9 | |
| A | US-A-3 658 185 (JACOBSON)<br>* Spalte 2, Zeile 30 - Spalte 4, Zeile 20; Figuren *<br>--- | 1-8 | |
| A | EP-A-0 199 899 (WRIGHT LINE INC.)<br>* Seite 6, Zeile 5 - Seite 14, Zeile 18; Figuren *<br>--- | 1,5,6,7 | **RECHERCHIERTE SACHGEBIETE (Int. Cl.4)**<br><br>G 11 B |
| A | FR-A-1 278 737 (AMMON)<br>* Seite 1; Figuren *<br>--- | 1,7,8 | |
| A | DE-C- 757 046 (P.R. WITTNER)<br>* Seite 2, Zeilen 38-68; Figuren *<br>----- | 1,2,4-8 | |

Der vorliegende Recherchenbericht wurde für alle Patentansprüche erstellt

| Recherchenort | Abschlußdatum der Recherche | Prüfer |
|---|---|---|
| DEN HAAG | 29-07-1988 | SPIGARELLI A. |